# EUROPÄISCHE PATENTSCHRIFT

(11) **EP 0 343 443 B1**
(45) Veröffentlichungstag und Bekanntmachung des Hinweises auf die Patenterteilung: **15.02.1995**
(21) Anmeldenummer: 89108535.9
(22) Anmeldetag: 12.05.1989
(51) Int. Cl.: G06K 15/02, B41J 2/32

(54) **Verfahren und Vorrichtung zur Herstellung einer Thermokopie**
Method and device for making a thermal copy
Méthode et dispositif pour faire une copie thermique

(30) Priorität: 25.05.1988 DE 3817625
(43) Veröffentlichungstag der Anmeldung: 29.11.1989
(73) Patentinhaber: Agfa-Gevaert AG, 51373 Leverkusen (DE)
(72) Erfinder: Käufl, Hans Ulrich, Dr., D-8042 Oberschleissheim (DE); Vedder, Hans Joachim, Dr., D-8039 Puchheim (DE)

(56) Entgegenhaltungen:
- GB-A- 2 083 726
- US-A- 4 804 977
- PATENT ABSTRACTS OF JAPAN, Band 12, Nr. 212 (M-710)[3059], 17. Juni 1988;& JP-A-63 015 753 (MATSUSHITA ELECTRIC IND CO., LTD) 22-01-1988
- PATENT ABSTRACTS OF JAPAN, Band 10, Nr. 18 (M-448))[2075], 24. Januar 1986;& JP-A-60 176 782 (FUJI XEROX K.K.) 10.09-1985

## Beschreibung

Die Erfindung betrifft ein Verfahren und eine Vorrichtung zur Herstellung einer Thermokopie mittels Thermosublimationstransfer, wobei eine Farbstoffträgerfolie gegenüber einem Empfängermaterial in einen genau definierten Abstand gebracht und pixelweise entsprechend der von der Farbstoffträgerfolie auf das Empfängermaterial zu übertragenden Farbdichte erwärmt wird.

Geräte zur Durchführung dieses Verfahrens werden von verschiedenen Herstellern in den Handel gebracht. Bei allen diesen Geräten wird die Farbstoffträgerfolie mit einem Heizelement erhitzt. Die relativ hohe Temperatur, die erforderliche geringe thermische Trägheit, die maximal zulässige Größe (ca. 100 um) sowie die relativ hohe elektrische Leistung des Schreibkopfes (200 bis 2000 mW), die pro Pixel benötigt wird, führen dazu, daß die Lebensdauer des Kopfes begrenzt ist und daß einer Zusammenfassung von vielen Pixeln auf einem Schreibkopf wegen der hohen Abwärme Grenzen gesetzt sind. Aus prinzipiellen Gründen (thermische Trägheit des Schreibkopfes, Sublimationsgeschwindigkeit der Farbstoffe) ist die Schreibdauer pro Pixel relativ lang (ca. 10 ms). Daraus folgt für große Formate bei hoher Auflösung ein prinzipiell nicht akzeptabler Zeitbedarf für die Erstellung von Bildern.

Aus der GB-A-2 083 726 ist ein Verfahren zur Herstellung von Thermokopien bekannt, bei dem eine Farbstoffträgerfolie mit einem pixelweise modulierten Laserstrahl erhitzt wird. Der Laserstrahl wird zeilenweise über die Farbstoffträgerfolie geführt und entsprechend der zu übertragenden Farbdichte moduliert. Die Farbstoffträgerfolie wird mit einem Empfängermaterial in Kontakt gebracht und die Farbdichte dabei auf das Empfängermaterial übertragen. Eine entsprechende Vorrichtung ist aus der JP-A-60 176 782 bekannt.

Um die in einer Farbstoffträgerfolie enthaltenen Farbstoffe auf den Sublimationspunkt zu erhitzen, ist eine relativ hohe Energiemenge nötig. Wenn diese Energiemenge durch eine Laserlichtquelle bereitgestellt werden soll, ist ein relativ leistungsstarker Laser erforderlich. Dies bringt wiederum relativ hohe Kosten mit sich.

Der Erfindung liegt daher die Aufgabe zugrunde, ein Verfahren und eine Vorrichtung der eingangs genannten Art zu schaffen, mit welchen die Erstellung von Thermokopien mit großen Pixelzahlen (z. B. 20.000.000 Pixel) in einer vertretbaren Herstellungszeit und mit einer vergleichsweise preiswerten Laserlichtquelle möglich ist.

Diese Aufgabe wird erfindungsgemäß gelöst durch die Merkmale des Verfahrensanspruchs 1 und des Vorrichtungsanspruchs 11. Weitere vorteilhafte Merkmale der Erfindung sind den Unteransprüchen entnehmbar.

Das Erhitzen der Farbstoffträgerfolie zum Sublimationspunkt mit einem Laser vermeidet alle eingangs angeführten Probleme. Der mit bekannter Technologie wie in allen Laserdruckern abgelenkte, jedoch vorzugsweise im Gegensatz zu einem Laserdrucker mehrfach über eine Zeile streichende modulierte Laserstrahl führt jedem Pixel während der Sublimationszeit eine genau dosierte Leistung zu, wodurch die von der eingestrahlten Leistung abhängige Farbtondichte exakt steuerbar ist. Da auf diese Weise parallel alle Pixel einer Zeile gleichzeitig angesteuert und erwärmt werden, kann so eine Zeile simultan in etwa 10 ms beschrieben werden. Auf diese Weise können eine hohe Pixeldichte (300 dpI) und eine hohe Schreibgeschwindigkeit für große Formate (z.B. A3 in 300 sec) erzielt werden. Zudem ist damit das Schreiben von mehrfarbigen Halbtonkopien möglich.

Die Erfindung wird anhand von Zeichnungen näher erläutert. Es zeigen
- Fig. 1: eine perspektivische Prinzipdarstellung einer an sich bekannten Laserstrahlanordnung, durch die eine Farbstoffträgerfolienzeile erhitzbar ist,
- Fig. 2: eine Seitenansicht der erfindungswesentlichen Teile einer Ausgestaltung einer erfindungsgemäßen Vorrichtung,
- Fig. 3: eine andere Ausgestaltung einer erfindungsgemäßen Vorrichtung,

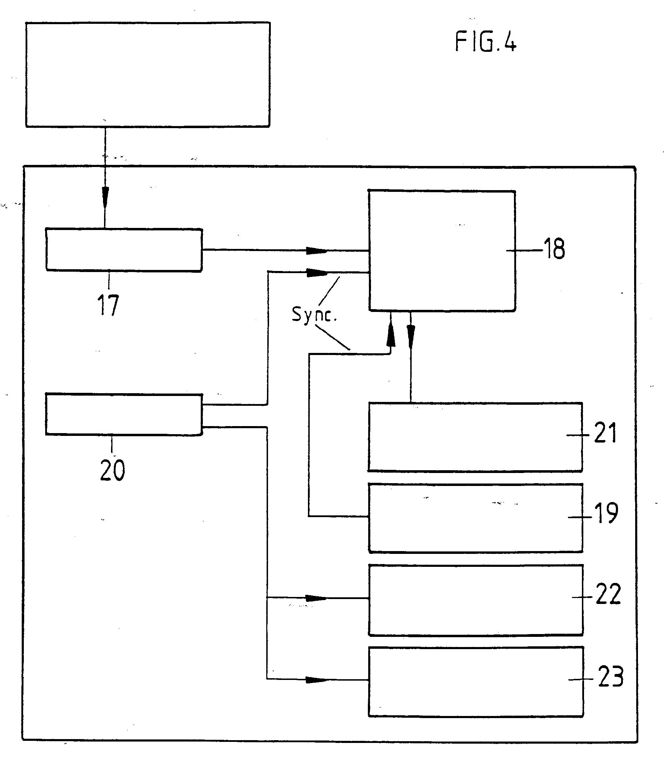

- Fig. 4: ein Flußdiagramm des erfindungsgemäßen Verfahrens.

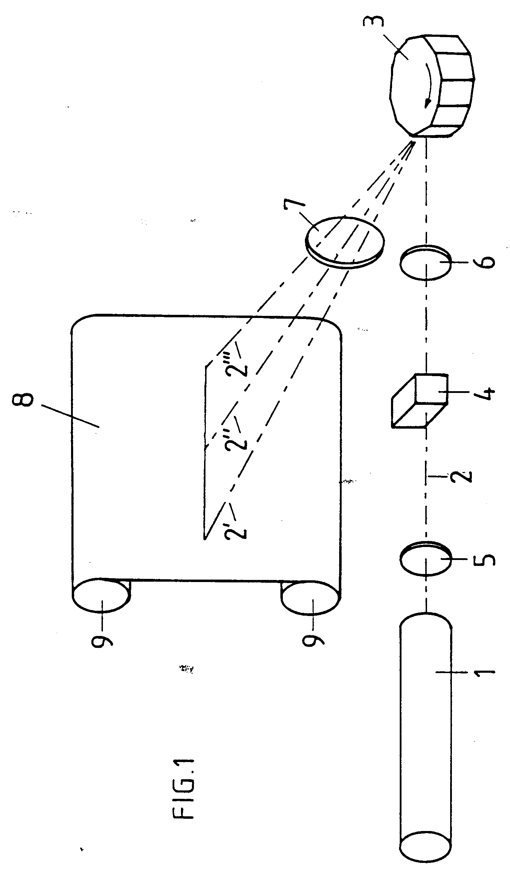

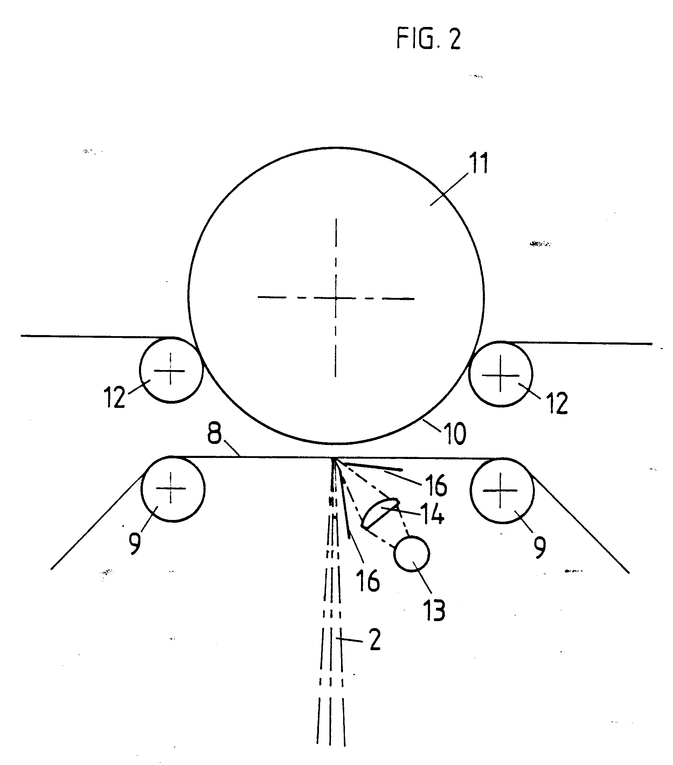

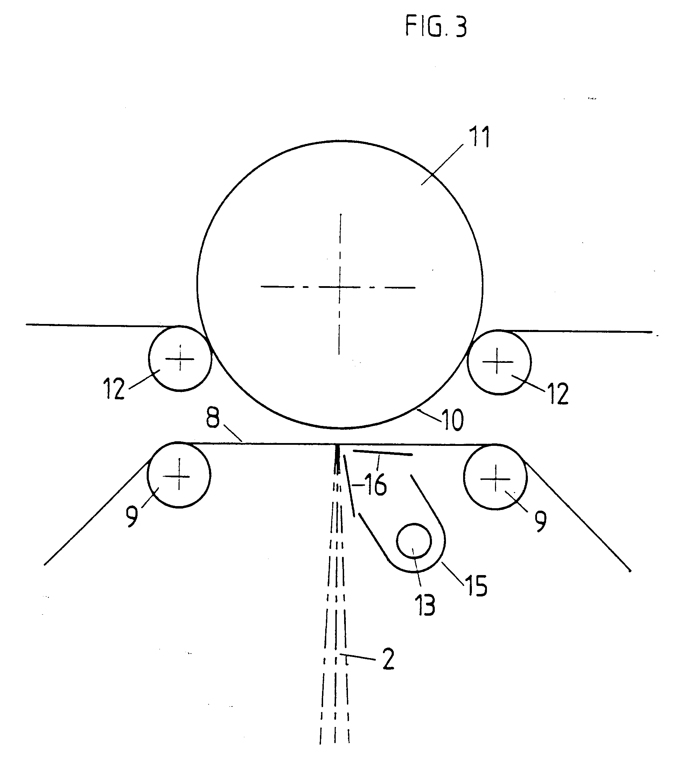

In Figur 1 sind ein Laser mit 1, sein Laserstrahl mit 2, dessen nach der Ablenkung durch einen Polygonspiegel 3 angedeutete Stellungen längs einer zu beschreibenden Zeile mit 2′, 2˝, 2′′′, ein Modulator für den Laserstrahl mit 4 sowie verschiedene nur schematisch angegebene Optiken zur Fokussierung des Laserstrahles mit 5 bis 7 bezeichnet. Diese in Figur 1 gezeigte Laserstrahlanordnung wird in Verbindung mit den Thermo-Kopiervorrichtungen nach Figuren 2 oder 3 verwendet, wobei in allen Figuren für gleiche Teile gleiche Bezugsziffern verwendet werden.

Gemäß den Figuren 2 und 3 ist eine thermisch beeinflußbare Farbstoffträgerfolie 8 im Bereich des auftreffenden Laserstrahles 2 gerade geführt und mittels Transportrollen 9 mit großer Präzision bewegbar. In ganz geringem, definiertem Abstand hinter der Farbstoffträgerfolie 8 oder in Berührung damit wird das Empfängermaterial 10 für die bei Erwärmung von der Farbstoffträgerfolie 8 sublimierenden Farbstoffe über eine große Transporttrommel 11 geführt und durch zwei daran anliegende kleine Transporttrommeln 12 mit großer Exaktheit zeilenweise transportiert. In der Auftreffzeile des Laserstrahles 2 liegt die Farbstoffträgerfolie 8 tangential zur großen Transporttrommel 10. Seitlich der Laserstrahlzeile, aber auf diese gerichtet, ist eine Infrarotlichtquelle 13 angeordnet, deren Wärmestrahl mittels einer Optik 14 oder eines Reflektors 15 zur Vorerwärmung der Farbstoffträgerfolie 8 auf die durch den Laserstrahl 2 zu beschreibende Zeile gerichtet ist. Damit jedoch nicht seitlich dieser Zeile gelegene Bereiche der Farbstoffträgerfolie 8 vor oder nach der Beschriftung durch den Laserstrahl 2 erwärmt werden, sind Blenden 16 zwischen der Infrarotlichtquelle 13 und dem Laserstrahl 2 einerseits und der Infrarotlichtquelle 13 und der Transportbahn der Farbstoffträgerfolie 8 andererseits angeordnet.

Gemäß dem erfindungsgemäßen Verfahren wird also die Farbstoffträgerfolie 8 zeilen- und pixelweise durch einen Laserstrahl erwärmt. Wenn ein sehr starker Laser verwendet wird, kann ein einmaliges Überstreichen einer Zelle durch den Laserstrahl 2 bereits ausreichen, um den Farbstoff genügend zu erwärmen. Dann werden Farbstoffträgerfolie und Empfängermaterial genau um eine Zeile weitergeschaltet. Der Preis für Laser steigt aber mit wachsender Laserleistung stark an. Es ist daher möglich und vorteilhaft, einen relativ schwachen Laser 1 zu verwenden. Jedes Pixel wird dabei während der Aufheiz- und Sublimationsphase mehrfach durch den Laserstrahl 2 erwärmt. Die Zeit zwischen zwei aufeinanderfolgenden Abtastungen hat in diesem Fall kürzer zu sein als die thermische Trägheit der Folie 8. Die effiziente Nutzung der vom Laser emittierten Energie ist eine weitere Möglichkeit, die notwendige Laserleistung zu senken. Dazu wird ein Additiv, insbesondere Ruß, in der Folie 8 dispergiert. Ein geeigneter Raster-Image-Processor 18 hat die Aufgabe, die Tonwiedergabe des gespeicherten Bildes in entsprechende Belichtungsdaten für die Lasermodulation 21 umzurechnen. Die Lasermodulation 21 sowie die Synchronisation von Pixelclock 19 und Scanelement erfolgen in bisher bekannter Weise.

Damit eine schwache Laserleistung unter mehrmaligen Überstreichen einer Zeile mit dem Laserstrahl zu dem gewünschten Ergebnis führt, ist es zweckmäßig, die gerade abzutastende Zeile der Folie 8 vorzuwärmen. Dazu wird die Strahlung des Infrarotlichtstrahlers 13 durch eine geeignete Optik (Zylinderlinse oder Reflektor mit elliptischem Querschnitt) durch eine Blende 16 auf die gerade vom Laser belichtete Zone der Farbstoffträgerfolie 8 fokussiert. Der Zweck der Blende 16 ist es, den restlichen Teil der Farbstoffträgerfolie 8 vor einer Erwärmung durch den Infrarotlichtstrahler 13 zu schützen. Dies ist nötig, weil die mechanische Stabilität der Farbstoffträgerfolie 8 beschränkt ist.

Aufgabe des Empfängermaterialtransportes ist es, das Empfängermaterial mit einer absoluten Genauigkeit von etwa 30 % eines Pixeldurchmessers zur Belichtung der jeweiligen Zeile zu positionieren. Da insgesamt mindestens drei Farbauszüge (Gelb, Magenta, Cyan, evtl. aber auch Schwarz oder Sonderfarben wie Fluoreszenzfarbstoffe) übertragen werden müssen, ist es erforderlich, das Empfängerblatt 10 nach dem Durchlauf wieder zurückzutransportieren und mit der oben beschriebenen Genauigkeit den nächsten Farbauszug zu übertragen. Dies ist solange zu wiederholen, bis alle Farbauszüge übertragen sind. Um dabei die erforderliche Genauigkeit zu erreichen, kann eine Zwangsführung des Empfängermaterials 10 mittels Perforation erforderlich sein.

Das Transportsystem für die Farbstoffträgerfolie 8 hat einerseits die Aufgabe, einen definierten Abstand zwischen Folie 8 und Empfängermaterial 10 sicherzustellen (ca. 0-30 % des Pixeldurchmessers) und hat andererseits dafür zu sorgen, daß nach dem Belichten einer Zeile frische Farbstoffträgerfolie der richtigen Art in den Zeilenbereich transportiert wird.

Um die Gesamtdauer der Erstellung einer Kopie so gering wie möglich zu halten, ist der Raster-Image-Prozessor 18 so zu programmieren, daß für jede Zeile die auf der Kopie wiederzugebende jeweilige Maximaldichte (für jeden Farbauszug getrennt) erkannt wird. Nach Ablauf der zugehörigen Belichtungszeit, die deutlich kürzer sein kann als die im System vorgesehene Zeit zum Erreichen der absoluten Maximaldichte, kann dann bereits auf die nächste Zeile übergegangen werden und so die Gesamtzeit zum Erstellen einer Kopie reduziert werden.

Nach diesem Verfahren lassen sich im Vergleich zu bisherigen Thermokopien vergleichsweise sehr große Kopienformate in relativ kurzer Zeit herstellen, z.B. in den Formaten DIN A4 und A3.

Die elektronische Bildinformation wird durch ein geeignetes analoges oder digitales Interface von der Bildquelle (Farbfernsehkamera, Computer, Grafik-Workstation, Videorecorder, Bildplatte, Scanner oder ähnlichem) in einen vorzugsweise geräteseitigen Bildspeicher 17 übertragen. In dem Raster-Image-Prozessor 18 werden aus dieser Bildinformation dann zeilenweise nach Farbauszügen getrennt (Gelb, Magenta, Cyan, evtl. auch Schwarz und Sonderfarben wie z.B. Fluoreszenzfarben) die Belichtungsdaten für jedes Pixel berechnet.

Aus einem Spender (Rolle, Blattstapel) wird ein Empfängerblatt 10 in die Schreibeinheit eingeführt sowie die Farbträgerfolie 8 im Farbträgerfolientransport 9 in Position gebracht.

Ist das Gerät betriebsbereit, so wird die Bildinformation zeilenweise nach Farbauszügen getrennt aus dem Raster-Image-Prozessor abgerufen. Eine Pixelclock 19 sorgt dafür, daß entsprechend der Position des Scanelementes (z.B. rotierendes Polygon 3) die Strahlung eines geeigneten Lasers 1 (z.B. NdYAG-Laser) so moduliert wird, daß das jeweilige Folienelement entsprechend dem gewünschten Farbtonwert erhitzt wird. Die Modulation des Lasers 1 kann extern (z.B. mit einem akustooptischen Modulator 21) oder intern (z.B. mit LED-gepumptem NdYAG-Laser) erfolgen. Während der Dauer des Aufheizvorganges bis zum Sublimationspunkt sowie während der Sublimationsphase wird jedes Pixel der gerade belichteten Zeile mehrfach durch den Laserstrahl 2 erhitzt und zwar so, daß die Wiederholfrequenz hoch ist, verglichen mit der thermischen Trägheit des Folienelementes.

Die Punktschärfe des abbildenden Objektivs 7 nach dem Scanelement 3 hat so zu sein, daß ein Brennfleckdurchmesser von etwa 2-90 um erzielt wird. Dies entspricht dann einer Auflösung von rund 300 dpI.

Nach Erreichen des höchsten Tonwerts in der gerade belichteten Zeile erfolgt ein Zeilenvorschub für das Empfängermaterial und für die Farbträgerfolie. Dann erfolgt die Belichtung der nächsten Zeile wie oben beschrieben. So werden nacheinander alle Zeilen und Farbauszüge abgearbeitet. Die fertige Kopie wird dann in einem Ausgabekorb oder Stapel abgelegt.

## Patentansprüche

1. Verfahren zur Herstellung einer Thermokopie mittels Thermosublimationstransfer, wobei eine Farbstoffträgerfolie (8) gegenüber einem Empfängermaterial (10) in einen genau definierten Abstand oder in Kontakt gebracht und entsprechend der von der Farbstoffträgerfolie (8) auf das Empfängermaterial (10) zu übertragenden Farbdichte pixelweise von einem zeilenweise über die Farbstoffträgerfolie (8) geführten Laserstrahl (2) auf den Sublimationspunkt erwärmt wird, wobei der Laserstrahl (2) entsprechend der zu übertragenden Farbdichte moduliert wird, dadurch gekennzeichnet, daß die jeweils durch den Laserstrahl (2) abgetastete Zeile der Farbstoffträgerfolie (8) über ihre ganze Länge vorgewärmt wird.

2. Verfahren nach Anspruch 1, dadurch gekennzeichnet, daß der Laserstrahl (2) während der Erhitzung und Sublimationsphase mehrfach mit der entsprechenden Modulation über dieselbe Zeile geführt wird, daß also jedes Pixel mehrfach durch den Laserstrahl (2) abgetastet und erwärmt wird.

3. Verfahren nach Anspruch 1 oder 2, dadurch gekennzeichnet, daß die Zeitspanne zwischen zwei aufeinanderfolgenden Abtastungen desselben Pixels kürzer gehalten wird als die durch die thermische Trägheit bedingte Abkühlungszeit der Farbstoffträgerfolie (8).

4. Verfahren nach einem der Ansprüche 1, 2 oder 3, dadurch gekennzeichnet, daß die jeweils durch den Laserstrahl (2) abzutastende Zeile der Farbstoffträgerfolie (8) durch einen Infrarotlichtstrahler (13) über ihre ganze Länge vorgewärmt wird.

5. Verfahren nach einem der vorhergehenden Ansprüche, dadurch gekennzeichnet, daß die Farbstoffträgerfolie (8) mit einem die eingestrahlte Energie absorbierenden Zusatz, insbesondere Ruß, versehen ist.

6. Verfahren nach einem der vorhergehenden Ansprüche, dadurch gekennzeichnet, daß verschiedene Farbauszüge durch nacheinander erfolgende Zuordnung von verschiedenen Farbstoffträgerfolien (Gelb, Magenta, Cyan u. a.) zu dem Empfängermaterial (10) und nacheinander erfolgende zeilenweise Laserabtastung der verschiedenen Farbstoffträgerfolien hergestellt werden und daß der Transport des Empfängermaterials (10) so durchgeführt wird, daß jedes einzelne Farbpixel auf das Empfängermaterial (10) bei sämtlichen Laserstrahlabtastungen immer wieder etwa an der gleichen Stelle mit dem gleichen Durchmesser übertragen wird.

7. Verfahren nach Anspruch 5, dadurch gekennzeichnet, daß die mittels des modulierten Laserstrahls (2) in ihrer Farbdichte bestimmten Pixel (Gelb, Magenta, Cyan u. a.) derart auf das Empfängermaterial (10) geschrieben werden, daß eine mehrfarbige Halbtonkopie erzeugt wird.

8. Verfahren nach einem der vorhergehenden Ansprüche, dadurch gekennzeichnet, daß das Empfängermaterial (10) mit einer Genauigkeit von etwa 30 % eines Pixeldurchmessers zur Abtastung der jeweiligen Zeile positioniert wird.

9. Verfahren nach einem der vorhergehenden Ansprüche, dadurch gekennzeichnet, daß zwischen der Farbstoffträgerfolie (8) und dem Empfängermaterial (10) bei der zeilenweisen Abtastung ein definierter Abstand von 0 bis 30 % eines Pixeldurchmessers sichergestellt wird.

10. Verfahren nach einem der vorhergehenden Ansprüche, dadurch gekennzeichnet, daß ein Brennfleckdurchmesser des Laserstrahles (2) von 2 bis 90 »m eingestellt wird.

11. Vorrichtung zur Herstellung einer Thermokopie mittels Thermosublimationstransfers, bei der eine Farbstoffträgerfolie (8) und ein Empfängermaterial (10) in definiertem Abstand voneinander bewegbar bzw. stillsetzbar sind und die Farbstoffträgerfolie (8) pixel- und zeilenweise erwärmbar ist, wobei als Wärmequelle eine Laserstrahleinrichtung (1 bis 7) vorgesehen ist, durch die ein modulierter Laserstrahl (2) längs jeweils einer Zeile der Farbstoffträgerfolie (8) bewegbar ist und je eine Transportvorrichtung (9 bzw. 11, 12) für die Farbstoffträgerfolie (8) und das Empfängermaterial (10) angeordnet sind, durch welche Farbstoffträgerfolie (8) und Empfangsmaterial (10) synchron zueinander bewegbar sind, dadurch gekennzeichnet, daß neben und längs der durch den Laserstrahl (2) abtastbaren Zeile ein Infrarotlichtstrahler (13) angeordnet ist, durch den das jeweils in der Abtastzeile liegende Farbstoffträgerfolienstück vorerwärmt wird.

12. Vorrichtung nach Anspruch 11, dadurch gekennzeichnet, daß nahe der Abtaststelle vor dem Infrarotstrahler (13) eine Blende bzw. zwei Blendenplatten (16) angeordnet sind, durch die außerhalb der Abtastzeile liegende Farbstoffträgerfolienbereiche gegen die Wärmestrahlung des Infrarotstrahlers (13) abgeschirmt sind.

13. Vorrichtung nach einem der Ansprüche 11 oder 12, dadurch gekennzeichnet, daß ein Bildspeicher (17) vorgesehen ist, in den eine zu kopierende Bildinformation in analoger oder digitaler Form eingespeichert wird, daß dem Bildspeicher (17) ein Raster-Image-Prozessor (18) nachgeschaltet ist, durch den zeilenweise nach Farbauszügen getrennt, Belichtungsdaten für jedes zu erwärmende Pixel der Bildinformation ermittelt und mittels einer zugeschalteten Pixelclock (19) die Lasermodulation (21) gesteuert werden, und daß ein Steuerrechner (20) einerseits mit dem Raster-Image-Prozessor (18) und andererseits mit den Steuerungen (22, 23) für die Transportmittel (9, 11, 12) von Farbstoffträgerfolie (8) und Empfängermaterial (10) verbunden ist.

## Claims

1. Method of producing a thermal copy by means of heat sublimation transfer, a dye carrier foil (8) opposite a receiver material (10) being brought to a precisely defined distance or into contact and, according to the colour density to be transferred from the dye carrier foil (8) onto the receiver material (10), is heated pixel by pixel to the point of sublimation by a laser beam (2) which is guided line by line over the dye carrier foil (8), the laser beam (2) being modulated according to the colour density to be transferred, characterized in that the line of the dye carrier foil (8) which is scanned by the laser beam (2) in each case is preheated over its entire length.

2. Method according to Claim 1, characterized in that the laser beam (2) is guided a number of times at the appropriate modulation over the same line during the heating process and sublimation phase such that each pixel is scanned and heated a number of times by the laser beam (2).

3. Method according to Claim 1 or 2, characterized in that the time interval between two successive scannings of the same pixel is maintained shorter than the cooling-down period of the dye carrier foil (8) necessitated by the thermal inertia.

4. Method according to any one of the preceding Claims, characterized in that the dye carrier foil (8) is provided with an additive, in particular soot, which absorbs the irradiated energy.

5. Method according to any one of the preceding claims, characterized in that various colour components are produced by the successive association of various dye carrier foils (yellow, magenta, cyan, etc.) with the receiver material (10) and successive line-by-line laser scanning of the various dye carrier foils; and in that the receiver material (10) is conveyed in such a way that each individual colour pixel is repeatedly transferred to the receiver material (10) during all the laser beam scannings approximately at the same point with the same diameter.

6. Method according to Claim 4, characterized in that the pixel (yellow, magenta, cyan, etc.) of which the colour density is determined by the modulated laser beam (2) is written onto the receiver material (10) in such a way that a multicoloured half-tone copy is produced.

7. Method according to any one of the preceding claims, characterized in that the receiver material (10) is positioned with an accuracy of approximately 30% of a pixel diameter in order to scan the respective line.

8. Method according to any one of the preceding claims, characterized in that a defined distance of 0 to 30% of a pixel diameter is ensured between the dye carrier foil (8) and the receiver material (10) during line-by-line scanning.

9. Method according to any one of the preceding claims, characterized in that a focal spot diameter of the laser beam (2) of 2 to 90 »m is set.

10. Device for producing a thermal copy by means of heat sublimation transfer, in which device a dye carrier foil (8) and a receiver material (10) can be moved or stopped at a defined distance from one another and the dye carrier foil (8) can be heated pixel by pixel and line by line, a laser beam device (1 to 7) being provided as a heat source by means of which a modulated laser beam (2) can be moved along one line of the dye carrier foil (8) in each case and a conveying device (9 and 11, 12 respectively) is arranged in each case for the dye carrier foil (8) and for the receiver material (10), by means of which conveying devices the dye carrier foil (8) and receiver material (10) can be moved synchronously towards one another, characterized in that an infrared light radiator (13) is disposed adjacent and along the line which can be scanned by the laser beam (2) and preheats the dye carrier foil part lying in the scanned line in each case.

11. Device according to Claim 10, characterized in that a screen or two screen plates (16) by means of which dye carrier foil areas lying externally of the scanned line are screened against the radiation of heat from the infrared radiator (13) is/are disposed adjacent the scanned point in front of the infrared radiator (13).

12. Device according to either of Claims 10 and 11, characterized in that an image memory (17) is provided in which image information to be copied is stored in analogue or digital form; in that connected downstream of the image memory (17) is a raster - image processor (18) by means of which exposure data, separated according to colour components, are determined for each pixel of the image information to be heated and the laser modulation (21) is controlled by means of a connected pixel clock (19); and in that a control computer (20) is connected on the one hand to the raster - image processor (18) and on the other to the controls (22, 23) for the means (9, 11, 12) for conveying the dye carrier foil (8) and receiver material (10).

## Revendications

1. Procédé de fabrication d'une copie thermique au moyen d'un transfert thermique par sublimation, dans lequel on amène une feuille (8) support d'un colorant en face d'un matériau récepteur (10), à une distance définie avec précision ou en contact et, en fonction de la densité de la couleur à transférer, de la feuille (8) support du colorant, sur le matériau récepteur (10), un faisceau laser (2), guidé ligne par ligne le long de la feuille (8) support du colorant, la chauffe, pixel par pixel, pour l'amener au point de sublimation, le faisceau laser (2) étant modulé en fonction de la densité de la couleur à transférer, caractérisé par le fait que l'on préchauffe sur toute sa longueur la ligne de la feuille (8) support du colorant respectivement balayée par le faisceau laser (2).

2. Procédé selon la revendication 1, caractérisé par le fait que, pendant le chauffage et la phase de sublimation, le faisceau laser (2) est plusieurs fois guidé le long de la même ligne avec la modulation correspondante, et que donc chaque pixel est balayé et chauffé plusieurs fois par le faisceau laser (2).

3. Procédé selon la revendication 1 ou 2, caractérisé par le fait que l'intervalle de temps entre deux balayages successifs du même pixel est maintenu plus bref que la durée de refroidissement de la feuille (8) support du colorant imposée par l'inertie thermique.

4. Procédé selon l'une des revendications précédentes, caractérisé par le fait que la feuille (8) support du colorant présente un additif, en particulier du noir de carbone, absorbant l'énergie rayonnée.

5. Procédé selon l'une des revendications précédentes, caractérisé par le fait que l'on réalise différentes sélections des couleurs en faisant successivement correspondre, l'une après l'autre, au matériau récepteur (10), différentes feuilles support de colorant (jaune, magenta/pourpre, cyan/bleu-vert, etc.) et en balayant successivement l'une après l'autre, ligne par ligne, les différentes feuilles support de colorant et que l'on procède au transport du matériau récepteur (10) de façon que, lors de tous les balayages par le faisceau laser, chacun des différents pixels de couleur soit toujours à nouveau transféré sur le matériau support (10) à peu près au même endroit avec le même diamètre.

6. Procédé selon la revendication 4, caractérisé par le fait que les pixels (jaune, magenta, cyan, etc.), dont la densité de couleur est déterminée au moyen du faisceau laser modulé (2), s'inscrivent sur le matériau récepteur (10) de façon à donner une copie en demi-teinte polychrome.

7. Procédé selon l'une des revendications précédentes, caractérisé par le fait que l'on positionne le matériau récepteur (10) avec une précision d'environ 30% du diamètre d'un pixel pour le balayage de la ligne en question.

8. Procédé selon l'une des revendications précédentes, caractérisé par le fait qu'entre la feuille (8) support du colorant et le matériau récepteur (10) on garantit, lors du balayage ligne par ligne, une distance définie valant de 0 à 30% du diamètre d'un pixel.

9. Procédé selon l'une des revendications précédentes, caractérisé par le fait que l'on règle le diamètre d'un spot de combustion du faisceau laser (2) à une valeur de 2 à 90 »m.

10. Dispositif pour la fabrication d'une copie thermique au moyen d'un transfert thermique par sublimation, dans le cas duquel on peut déplacer et fixer une feuille (8) support du colorant et un matériau récepteur (10) à une distance définie l'un de l'autre et on peut chauffer pixel par pixel et ligne par ligne la feuille (8) support du colorant, dans lequel, comme source de chaleur, est prévu un organe à faisceau laser (1 à 7) au moyen duquel un faisceau laser modulé (2) peut se déplacer le long de chacune des lignes de la feuille (8) support du colorant et dans lequel sont disposés à la fois un dispositif de transport (9 ou 11, 12) pour la feuille (8) support du colorant et pour le matériau support (10), grâce auxquels la feuille (8) support du colorant et le matériau récepteur (10) peuvent se déplacer en synchronisme l'un par rapport à l'autre, caractérisé par le fait qu'à côté et le long de la ligne que doit balayer le faisceau laser (2) est disposée une source de rayonnement infrarouge (13) grâce auquel la portion de la feuille support du colorant qui se trouve chaque fois sur la ligne balayée est préchauffée.

11. Dispositif selon la revendication 10, caractérisé par le fait que près de l'endroit du balayage, en avant de la source de rayonnement infrarouge (13), sont disposés un diaphragme, ou deux lamelles de diaphragme (16), grâce auquel les zones de la feuille support du colorant situées à l'extérieur de la ligne balayée sont protégées à l'égard du rayonnement thermique de la source de rayonnement infrarouge (13).

12. Dispositif selon l'une des revendications 10 ou 11, caractérisé par le fait qu'est prévue une mémoire d'image (17) dans laquelle est mémorisée, sous forme analogique ou numérique, une information relative à l'image à copier, par le fait qu'à la suite de la mémoire d'image (17) est mis en circuit un processeur trame-image (18) grâce auquel des données relatives à l'éclairement pour chaque pixel de l'image à chauffer sont déterminées, ligne par ligne, séparément selon les sélections de couleur, et grâce auquel la modulation du laser (21) est commandée au moyen d'un signal d'horloge (19) déclenché, et par le fait qu'un calculateur de commande (20) est relié d'une part avec le processeur trame-image (8) et d'autre part avec les circuits de commande (22, 23) pour les moyens de transport (9, 11, 12) de la feuille (8) support du colorant et du matériau récepteur (10).
